# DEMANDE DE BREVET EUROPEEN

(11) **EP 4 834 661 A1**
(43) Date de publication de la demande: **04.11.2026**
(21) Numéro de dépôt: 26174806.5
(22) Date de dépôt: 27.04.2026
(51) Int. Cl.: B60P 3/20

(54) **ENCEINTE RÉFRIGÉRÉE COMPRENANT UNE CLOISON DE SÉPARATION MOBILE ENTRE UNE POSITION DÉPLOYÉE ET UNE POSITION RÉTRACTÉE**

(30) Priorité: 28.04.2025 FR 2504471
(71) Demandeur: LECAPITAINE, 50000 Saint Lo (FR)
(72) Inventeur: YBERT, Florentin, 50800 VILLEDIEU LES POELES (FR)
(74) Mandataire: Lavoix

(57) **Abrégé**

L'enceinte réfrigérée (1) comprend un plancher (2) et un plafond (4) et une cloison de séparation (14) comprenant un panneau supérieur (22) articulé au plafond (4) et un panneau inférieur (24) articulé au panneau supérieur (22), ladite cloison de séparation étant mobile entre une position déployée, dans laquelle le panneau supérieur (22) et le panneau inférieur (24) s'étendent dans la continuité l'un de l'autre du plafond (4) au plancher (2), et une position rétractée, dans laquelle le panneau supérieur (22) s'étend sensiblement parallèlement au plafond (4) et le panneau inférieur (24) s'étend contre le panneau supérieur (22).

La cloison de séparation (14) comprend un dispositif de transmission (40) agencé pour qu'un déplacement du panneau supérieur (22) vers le plafond (4) entraine un déplacement du panneau inférieur (24) vers le panneau supérieur (22).

## Description

La présente invention concerne une enceinte réfrigérée du type comprenant un plancher et un plafond, écartés l'un de l'autre selon une direction d'élévation et définissant entre eux un volume interne, et au moins une cloison de séparation, ladite cloison de séparation comprenant au moins un panneau supérieur articulé au plafond et au moins un panneau inférieur articulé au panneau supérieur, ladite cloison de séparation étant mobile entre une position déployée, dans laquelle le panneau supérieur et le panneau inférieur s'étendent dans la continuité l'un de l'autre selon la direction d'élévation du plafond au plancher pour séparer le volume interne en deux parties s'étendant de part et d'autre de la cloison de séparation selon une direction longitudinale, sensiblement perpendiculaire à la direction d'élévation, et une position rétractée, dans laquelle le panneau supérieur s'étend sensiblement parallèlement au plafond et au voisinage dudit plafond et le panneau inférieur s'étend contre le panneau supérieur pour libérer un passage entre les deux parties du volume interne.

L'invention concerne par exemple une enceinte réfrigérée d'un véhicule de transport de marchandises pour le transport de marchandises maintenues à basse température, tel qu'un camion ou une camionnette frigorifique pour le transport de marchandises périssables.

Dans une telle enceinte réfrigérée, il est parfois proposé de compartimenter le volume interne de l'enceinte afin de permettre la conservation de marchandises à différentes températures. Ainsi, il est par exemple prévu un compartiment surgelé, dans lequel la température est maintenue inférieure à 0°C, et un compartiment réfrigéré, dans lequel la température est maintenue entre 0°C et 10°C ou un compartiment tempéré maintenu à la température ambiante. Une cloison de séparation est alors prévue dans l'enceinte réfrigérée pour séparer les compartiments de façon étanche.

Une telle cloison de séparation peut être avantageusement rétractable pour permettre le chargement ou le déchargement du compartiment isolé, par exemple le compartiment surgelé, depuis le compartiment accessible depuis l'extérieur du véhicule par un ouvrant, par exemple le compartiment réfrigéré. A cet effet, il a été proposé une cloison de séparation repliable, comprenant un panneau supérieur articulé au plafond de l'enceinte et un panneau inférieur articulé au panneau supérieur. La cloison de séparation peut alors être déplacée entre une position déployée, dans laquelle la cloison de séparation isole les compartiments, et une position rétractée, dans laquelle le panneau supérieur est rabattu le long du plafond et le panneau inférieur est rabattu contre le panneau supérieur, permettant ainsi la circulation sur le plancher de l'enceinte entre les compartiments d'un opérateur et/ou d'un engin de manutention.

L'actionnement de la cloison de séparation est cependant compliqué notamment pour déplacer celle-ci de la position déployée à la position rétractée, ce déplacement nécessitant de replier le panneau inférieur contre le panneau supérieur et de replier le panneau supérieur contre le plafond, c'est-à-dire un actionnement du panneau inférieur d'une part et un actionnement du panneau supérieur d'autre part, ces actionnements se faisant à l'encontre de la force de gravité tendant à ramener les panneaux dans la position déployée. Des moyens spécifiques doivent en outre être prévus pour maintenir le panneau supérieur et le panneau inférieur dans la position rétractée.

L'un des buts de l'invention est de pallier ces inconvénients en proposant une enceinte réfrigérée comprenant une cloison de séparation déplaçable entre une position déployée et une position rétractée dont l'actionnement est simplifié.

A cet effet, l'invention concerne une enceinte réfrigérée du type précité, dans laquelle la cloison de séparation comprend un dispositif de transmission entre le panneau supérieur et le panneau inférieur, ledit dispositif de transmission étant agencé pour qu'un déplacement du panneau supérieur vers le plafond entraine un déplacement du panneau inférieur vers le panneau supérieur pour déplacer la cloison de séparation de la position déployée à la position rétractée.

Le dispositif de transmission entre le panneau supérieur et le panneau inférieur permet de déplacer la cloison de séparation de la position déployée à la position rétractée avec le seul actionnement du panneau supérieur pour rabattre celui-ci contre le plafond. Ainsi, l'actionnement de la cloison de séparation est simplifié, une seule manipulation de la cloison de séparation permettant de faire passer celle-ci de la position déployée à la position rétractée. En outre, le dispositif de transmission permet le maintien du panneau inférieur contre le panneau supérieur dans la position rétractée sans nécessiter d'autre moyen d'assujettissement du panneau inférieur sur le panneau supérieur.

L'enceinte réfrigérée selon l'invention peut en outre comprendre une ou plusieurs des caractéristiques suivantes, considérées seules ou selon toute combinaison techniquement envisageable :
- le dispositif de transmission comprend un élément d'engrenage supérieur solidaire du panneau supérieur et un élément d'engrenage inférieur solidaire du panneau inférieur, l'élément d'engrenage supérieur étant engrené avec l'élément d'engrenage inférieur, un déplacement du panneau supérieur en rotation par rapport au plafond entraînant un déplacement de l'élément d'engrenage inférieur sur l'élément d'engrenage supérieur, ce qui entraîne un déplacement du panneau inférieur en rotation par rapport au panneau supérieur.
- la cloison de séparation comprend une barre de renvoi articulée à une première extrémité au plafond autour d'une première liaison pivot et à une deuxième extrémité au dispositif de transmission autour d'une deuxième liaison pivot.
- le panneau supérieur s'étend entre un bord supérieur, articulé au plafond autour d'une liaison pivot supérieure, et un bord inférieur, articulé au panneau inférieur autour d'une liaison pivot inférieure, les distances selon la direction d'élévation et selon la direction longitudinale entre la première liaison pivot et la liaison pivot supérieure étant sensiblement égales aux distances selon la direction d'élévation et selon la direction longitudinale entre la deuxième liaison pivot et la liaison pivot inférieure.
- le déplacement du panneau supérieur d'un premier angle par rapport au plafond entraîne le déplacement du panneau inférieur d'un deuxième angle par rapport au panneau supérieur, le deuxième angle étant sensiblement égal à deux fois le premier angle.
- la cloison de séparation comprend un dispositif de blocage mobile entre une position de blocage, dans laquelle le dispositif de blocage interfère avec le dispositif de transmission pour empêcher le déplacement de la cloison de séparation entre la position déployée et la position rétractée, et une position de débrayage, dans laquelle le dispositif de blocage est désengagé du dispositif de transmission pour autoriser le déplacement de la cloison de séparation entre la position déployée et la position rétractée.
- le dispositif de blocage est positionnable dans la position de blocage lorsque la cloison de séparation est dans la position déployée, dans la position rétractée et dans au moins une position intermédiaire entre la position déployée et la position rétractée.
- le panneau inférieur s'étend entre un bord supérieur articulé au panneau supérieur et un bord inférieur opposé au bord supérieur, le bord inférieur étant en contact étanche avec le plancher dans la position déployée et étant écarté dudit plancher selon la direction d'élévation lorsque la cloison de séparation se déplace vers la position rétractée.
- le bord inférieur du panneau inférieur se déplace sensiblement dans un unique plan contenant la direction d'élévation entre la position déployée et la position rétractée.
- la cloison de séparation est montée sur le plafond de façon mobile en translation selon la direction longitudinale de sorte à faire varier le volume des parties du volume interne s'étendant de part et d'autre de la cloison de séparation en déplaçant la cloison de séparation selon la direction longitudinale.

D'autres aspects et avantages de l'invention apparaîtront plus clairement à la lecture de la description qui va suivre, donnée uniquement à titre d'exemple non limitatif, et faite en référence aux dessins annexés dans lesquels :
- la Fig. 1 est une représentation schématique en coupe d'un véhicule de transport de marchandises comprenant une enceinte réfrigérée selon l'invention ;
- la Fig. 2 est une représentation schématique de côté d'une cloison de séparation de l'enceinte réfrigérée de la Fig. 1, dans une position déployée,
- la Fig. 3 est une représentation schématique de côté de la cloison de séparation de la Fig. 2, dans une position intermédiaire,
- la Fig. 4 est une représentation schématique de côté de la cloison de séparation de la Fig. 2, dans une position rétractée,
- la Fig. 5 est une représentation schématique d'une zone supérieure du panneau supérieur de la cloison de séparation de la Fig. 2,
- la Fig. 6 est une représentation schématique en coupe du dispositif de transmission de la cloison de séparation de la Fig. 2 dans la position déployée, un dispositif de blocage étant dans une position de blocage,
- la Fig. 7 est une représentation schématique en coupe du dispositif de transmission de la Fig. 6, le dispositif de blocage étant dans une position de débrayage,
- la Fig. 8 est une représentation schématique en coupe du dispositif de transmission de la Fig. 6 dans la position intermédiaire, le dispositif de blocage étant dans la position de blocage, et
- la Fig. 9 est une représentation schématique en coupe du dispositif de transmission de la Fig. 6 dans la position rétractée, le dispositif de blocage étant dans la position de blocage.

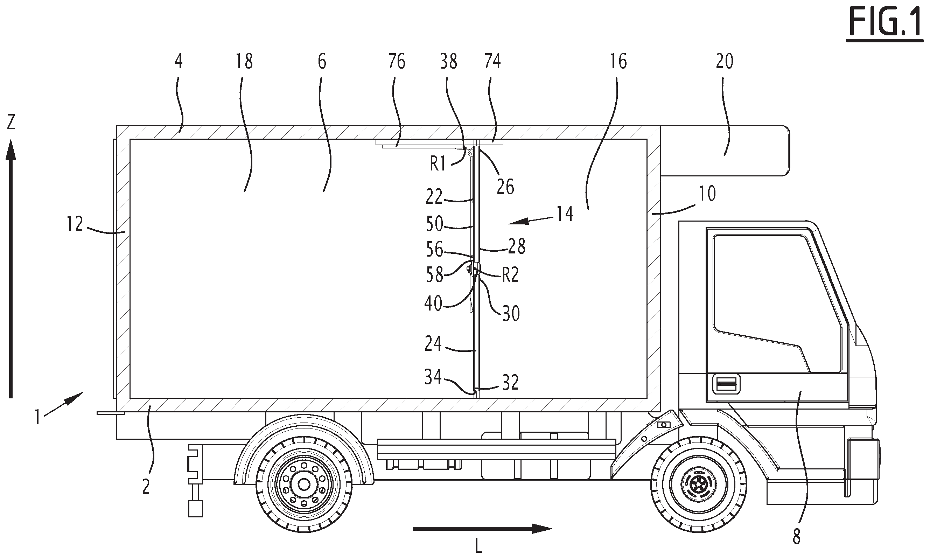

En référence à la Fig. 1, on décrit une enceinte réfrigérée 1 comprenant un plancher 2 et un plafond 4, écartés l'un de l'autre selon une direction d'élévation Z et définissant entre eux un volume interne 6. Une telle enceinte réfrigérée 1 est par exemple agencée sur un véhicule de transport de marchandises 8, tel qu'un camion ou une camionnette frigorifique. La direction d'élévation Z correspond par exemple à la hauteur du véhicule de transport de marchandises 8.

De façon classique, le volume interne 6 de l'enceinte réfrigérée 1 est délimité, en plus du plancher 2 et du plafond 4, par des cloisons latérales (non représentées), par une cloison avant 10 et par une cloison arrière 12. La cloison avant 10 s'étend par exemple en arrière de la cabine du véhicule de transport de marchandises 8 et la cloison arrière 12 est écartée de la cloison 10 selon une direction longitudinale L, sensiblement perpendiculaire à la direction d'élévation Z et correspondant par exemple à la longueur du véhicule de transport de marchandises 8. Le volume interne 6 de l'enceinte réfrigérée 1 est accessible depuis l'extérieur de l'enceinte réfrigérée 1 par au moins un ouvrant, telle qu'une porte ou un rideau coulissant, par exemple prévu dans la cloison arrière 12 de l'enceinte réfrigérée 1.

L'enceinte réfrigérée 1 comprend en outre au moins une cloison de séparation 14 s'étendant dans le volume interne 6 de sorte à séparer celui-ci en deux parties. Plus particulièrement, la cloison de séparation 14 s'étend entre la cloison avant 10 et la cloison arrière 12 selon la direction longitudinale L de sorte à délimiter une partie avant 16, entre la cloison avant 10 et la cloison de séparation 14, et une partie arrière 18, entre la cloison de séparation 14 et la cloison arrière 12. Une telle séparation permet notamment de séparer le volume interne en des compartiments maintenus à des températures différentes, par exemple un compartiment surgelé, formé par la partie avant 16, et un compartiment réfrigéré ou tempéré formé par la partie arrière 18. Dans ce cas, l'enceinte réfrigérée 1 comprend par exemple un module de réfrigération 20 en communication fluidique avec le volume interne 6 pour commander la température à l'intérieur de celle-ci. Il est entendu qu'un tel agencement est donné à titre d'exemple et que les parties avant et arrière pourraient être maintenues à d'autres températures, y compris à une température égale dans les deux parties.

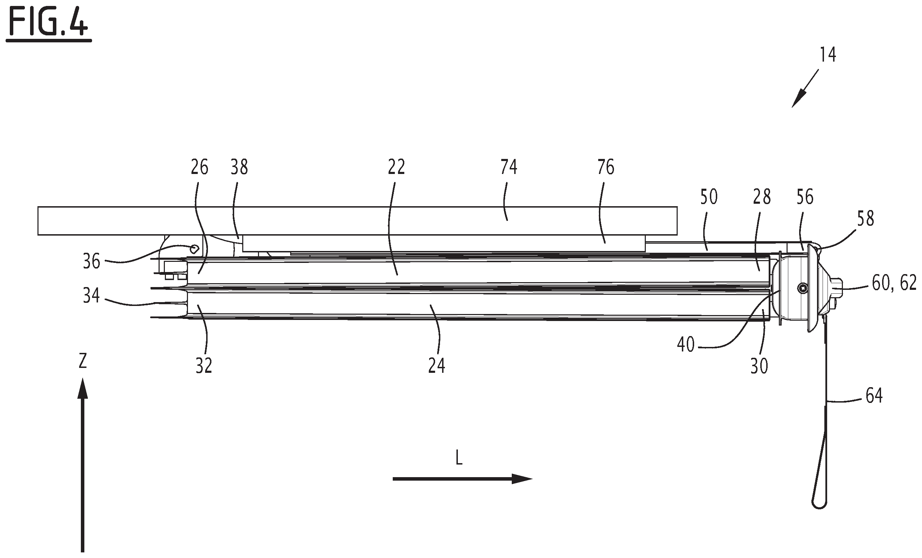

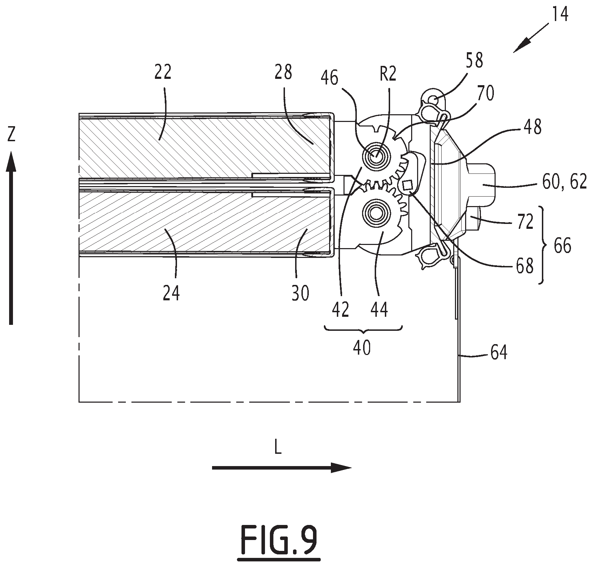

La cloison de séparation 14 est mobile entre une position déployée (Figs. 1, 2 et 5 à 7) et une position rétractée (Figs. 4 et 9) et comprend un panneau supérieur 22 et un panneau inférieur 24. Pour permettre le déplacement de la cloison de séparation 14 entre les positions déployée et rétractée, le panneau supérieur 22 est articulé au plafond 4 et le panneau inférieur 24 est articulé au panneau supérieur 22, comme cela sera décrit plus en détail ultérieurement.

Le panneau supérieur 22 s'étend entre un bord supérieur 26, articulé au plafond 4, et un bord inférieur 28, articulé au panneau inférieur 24, la distance entre le bord supérieur 26 et le bord inférieur 28 définissant la hauteur du panneau supérieur 22. La largeur du panneau supérieur 24 est définie par la distance entre des bords latéraux du panneau supérieur 24 joignant le bord supérieur 26 au bord inférieur 28 et écartés l'un de l'autre selon une direction transversale sensiblement perpendiculaire aux directions longitudinale L et d'élévation Z. La direction transversale correspond ainsi par exemple à la largeur du véhicule de transport de marchandises. Selon un mode de réalisation, dans lequel une seule cloison de séparation 14 permet de séparer le volume interne 6 en deux parties, la largeur du panneau supérieur 22 est sensiblement égale à la largeur du volume interne 6, c'est-à-dire que le panneau supérieur 22 s'étend d'une cloison latérale à l'autre. Selon un autre mode de réalisation, dans lequel deux cloisons de séparation 14 sont agencées adjacentes l'une de l'autre selon la largeur de l'enceinte réfrigérée 1 pour séparer le volume interne 6 en deux parties, la largeur du panneau supérieur 22 est par exemple sensiblement égale à la moitié de la largeur du volume interne 6.

Le panneau inférieur 24 s'étend entre un bord supérieur 30, articulé au panneau supérieur 23, et un bord inférieur 32 libre, la distance entre le bord supérieur 30 et le bord inférieur 32 définissant la hauteur du panneau inférieur 24. Le panneau inférieur 24 présente par exemple des dimensions sensiblement égales à celles du panneau supérieur 22. Ces dimensions sont la hauteur et la largeur, telles que définies ci-dessus, ainsi que l'épaisseur correspondant à la dimension des panneaux selon la direction perpendiculaire à la hauteur et à la largeur des panneaux et à la distance séparant les deux faces des panneaux. Selon un autre mode de réalisation, les dimensions du panneau inférieur 24 sont différentes de celles du panneau supérieur 22, notamment ce qui concerne la hauteur des panneaux afin d'adapter la hauteur totale de la cloison de séparation 14 à celle du volume interne 6 de l'enceinte réfrigérée 1 dans la position déployée de la cloison de séparation 14.

Dans la position déployée, la cloison de séparation 14 ferme de façon étanche au moins une partie du volume interne 6 de façon à isoler la partie avant 16 de la partie arrière 18 et ainsi permettre le maintien de marchandises à des températures différentes selon qu'elles sont placées dans la partie avant 16 ou dans la partie arrière 18. A cet effet, dans la position déployée, le panneau supérieur 22 et le panneau inférieur 24 s'étendent dans la continuité l'un de l'autre selon la direction d'élévation Z du plafond 4 au plancher 6, la hauteur cumulée des panneaux supérieur 22 et inférieur 24 étant sensiblement égale à la hauteur du volume interne 6 comme représenté sur la Fig. 1. Dans la position déployée, le bord inférieur 32 du panneau inférieur 24 est notamment placé en contact étanche avec le plancher 2.

Selon un mode de réalisation, afin d'assurer l'étanchéité de la séparation entre les parties du volume interne, le pourtour de la cloison de séparation 14 comprend un ou plusieurs joints d'étanchéité 34. Ce ou ces joints d'étanchéité 34 s'étendent en particulier au niveau du bord supérieur 26 du panneau supérieur 22, du bord inférieur 32 du panneau inférieur 24 et le long des bords latéraux des panneaux supérieur 22 et inférieur 24. Ainsi, dans la position déployée, le les joints d'étanchéités 34 assurent un contact étanche entre le bord supérieur 26 du panneau supérieur 22 et le plafond 4, entre le bord inférieur 32 du panneau inférieur 24 et le plancher 2, et entre les bords latéraux des deux panneaux et les cloisons latérales et/ou une autre cloison de séparation.

Dans la position rétractée, la cloison de séparation 14 libère un passage entre la partie avant 16 de la partie arrière 18 du volume interne 6. Ainsi, dans cette position et comme représenté sur la Fig. 4, le panneau supérieur 22 s'étend sensiblement parallèlement au plafond 4 et au voisinage de celui-ci et le panneau inférieur 24 s'étend contre le panneau supérieur 22, de sorte qu'un espace d'une hauteur proche de la hauteur totale du volume interne 6 est libéré entre le plancher 2 et le panneau inférieur 24 pour passer d'une partie à l'autre du volume interne 6. Par « au voisinage du plafond », on entend que la distance entre le plafond et la face du panneau supérieur 22 la plus proche du plafond 4 est par exemple sensiblement comprise entre 30 mm et 100 mm, par exemple sensiblement égale à 75 mm. L'espace libéré entre le plancher 2 et le panneau inférieur 24 permet la circulation d'un opérateur ou d'un véhicule de manutention sur le plancher 2 sans que la cloison de séparation 14 ne forme un obstacle à cette circulation. Dans la position rétractée, le panneau supérieur 22 et le panneau inférieur 24 s'étendent parallèlement l'un à l'autre et au plafond 4 et sont appliqués l'un contre l'autre et au voisinage du plafond 4. Ainsi, dans la position rétractée, la hauteur du panneau supérieur 22 et du panneau inférieur 24 s'étend selon la direction longitudinale L de sorte que l'encombrement de la cloison de séparation 14 selon la direction d'élévation Z est réduit, la dimension de la cloison de séparation 14 selon la direction d'élévation Z correspondant à l'addition de l'épaisseur des panneaux supérieur 22 et inférieur 24 dans la position rétractée.

Pour déplacer la cloison de séparation 14 de la position déployée à la position rétractée, le panneau supérieur 22 se déplace en rotation par rapport au plafond 4 autour d'un axe de rotation supérieur R1 et le panneau inférieur 24 se déplace en rotation par rapport au panneau supérieur 22 autour d'un axe de rotation inférieur R2. L'axe de rotation supérieur R1 et l'axe de rotation inférieur R2 sont parallèles l'un à l'autre et s'étendent selon la direction transversale. En outre, le déplacement des panneaux supérieur 22 et inférieur 24 sont synchronisés de sorte qu'un déplacement du panneau supérieur 22 entraine un déplacement correspondant du panneau inférieur 24 comme cela sera décrit plus en détail ultérieurement.

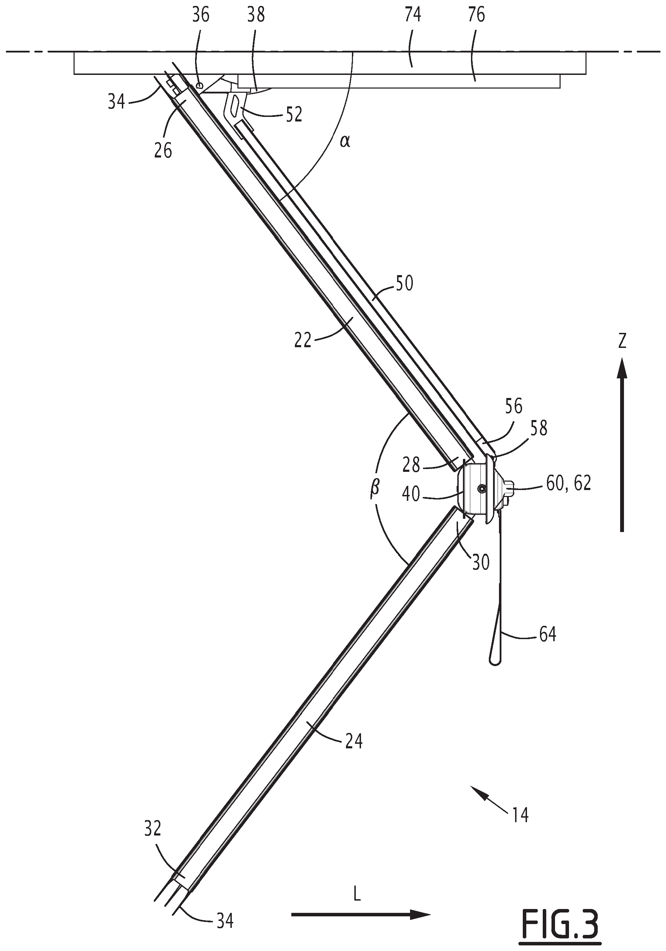

Le bord supérieur 26 du panneau supérieur 24 est articulé au plafond 4 autour d'une liaison pivot supérieure 36. La liaison pivot supérieure 36 est par exemple reliée à au moins un élément d'actionnement 38 permettant d'assister le déplacement du panneau supérieur 22 entre la position déployée et la position rétractée. Plus particulièrement, l'activation de l'élément d'actionnement permet de faire varier un premier angle α (représenté sur la Fig. 3) formé entre le panneau supérieur 22 et le plafond 4 entre 0° dans la position rétractée et 90° dans la position déployée. Lorsque la cloison de séparation 14 se déplace de la position déployée à la position rétractée, le premier angle α diminue et lorsque la cloison de séparation 14 se déplace de la position rétractée à la position déployée, le premier angle α augmente. L'élément d'actionnement 38 est par exemple formé par au moins un système d'équilibrage, par exemple deux système d'équilibrage prévus aux deux extrémités latérales de la liaison pivot supérieure 36 du panneau supérieur 22 afin d'assister le mouvement en rotation de celui-ci.

Un dispositif de transmission 40 est agencé entre le panneau supérieur 22 et le panneau inférieur 24, le dispositif de transmission 40 étant agencé pour qu'un déplacement du panneau supérieur 22 vers le plafond 4 entraine un déplacement du panneau inférieur 24 vers le panneau supérieur 22 pour déplacer la cloison de séparation 14 de la position déployée à la position rétractée. Le dispositif de transmission 40 est également agencé pour qu'un déplacement du panneau supérieur 22 pour l'écarter du plafond 4 entraîne un déplacement du panneau inférieur 24 pour l'écarter du panneau supérieur 22 vers le plancher 2 pour déplacer la cloison de séparation 14 de la position rétractée à la position déployée. En d'autres termes, le dispositif de transmission 40 est agencé pour faire varier un deuxième angle β (représenté sur la Fig. 3) formé entre le panneau supérieur 22 et le panneau inférieur 24 lorsque le premier angle α entre le panneau supérieur 22 et le plafond 4 varie. Plus particulièrement, le deuxième angle β varie entre 0° dans la position rétractée et 180° dans la position déployée, le deuxième angle β augmentant lorsque le premier angle α augmente et diminuant lorsque le premier angle α diminue.

En outre, le dispositif de transmission 40 est tel que le sens de rotation du panneau inférieur 24 est opposé au sens de rotation du panneau supérieur 24 lorsque la cloison de séparation 14 se déplace entre la position déployée et la position rétractée de sorte que le panneau inférieur 24 est ramené contre le panneau supérieur 22 lorsque le panneau supérieur 22 est ramené contre le plafond 4.

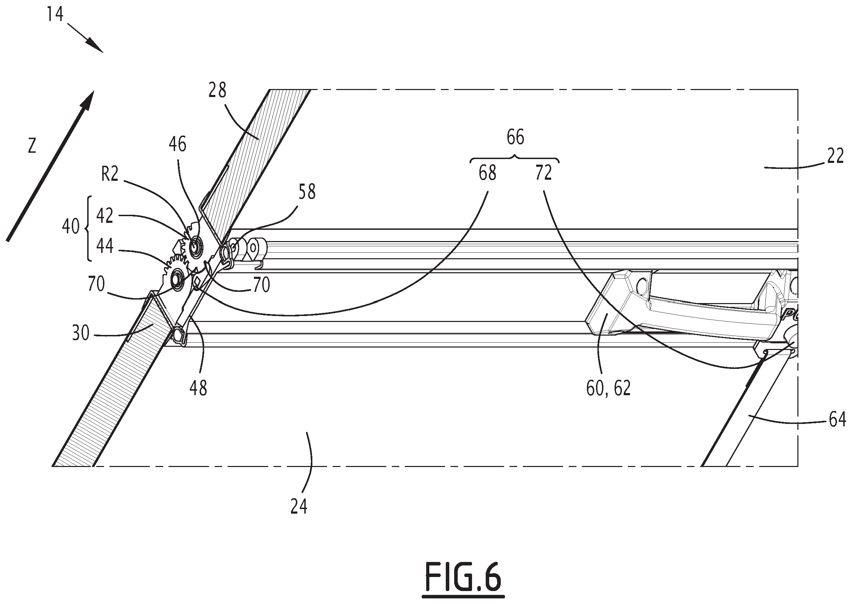

Comme plus particulièrement visible sur les Figs. 6 à 9, le dispositif de transmission 40 comprend un élément d'engrenage supérieur 42 solidaire du panneau supérieur 22 et un élément d'engrenage inférieur 44 solidaire du panneau inférieur 24, l'élément d'engrenage supérieur 42 étant engrené avec l'élément d'engrenage inférieur 44. L'élément d'engrenage supérieur 42 s'étend en saillie du bord inférieur 28 du panneau supérieur 22 vers le panneau inférieur 24 et l'élément d'engrenage inférieur 44 s'étend en saillie du bord supérieur 30 du panneau inférieur 24 vers le panneau supérieur 22. Lorsque le panneau supérieur 22 se déplace en rotation autour de l'axe de rotation supérieur R1 par rapport au plafond 4, l'élément d'engrenage inférieur 44 se déplace sur l'élément d'engrenage supérieur 42 de sorte à déplacer le panneau inférieur 24 autour d'un axe de rotation inférieur. Le centre de l'élément d'engrenage supérieur 42 forme à cet effet une liaison pivot inférieure 46 du bord inférieur 28 du panneau supérieur 22 articulée au panneau inférieur 24.

L'élément d'engrenage supérieur 42 et l'élément d'engrenage inférieur 44 sont par exemple articulés dans un boîtier 48 recevant et maintenant ces éléments d'engrenage 42 et 44 et s'étendant entre le panneau supérieur 22 et le panneau inférieur 24

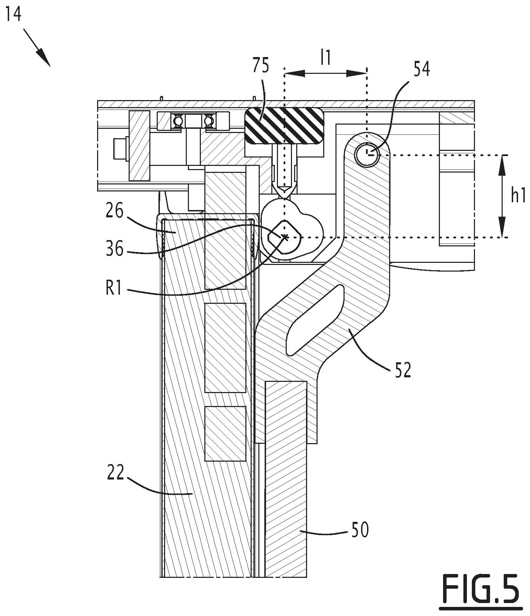

La cloison de séparation 14 comprend en outre au moins une barre de renvoi 50, articulée à une première extrémité 52 au plafond 4 autour d'une première liaison pivot 54 (Fig. 5) et à une deuxième extrémité 56 au dispositif de transmission 40 autour d'une deuxième liaison pivot 58. La barre de renvoi 50 s'étend ainsi le long du panneau supérieur 22 du plafond 4 au boîtier 48 et permet de renvoyer le mouvement du panneau supérieur 22 autour de la liaison pivot supérieure 36 au dispositif de transmission 40 pour que ce mouvement du panneau supérieur 22 entraîne celui du panneau inférieur 24 autour de la liaison pivot inférieure 46. La deuxième liaison pivot 58 est formée entre la deuxième extrémité 56 de la barre de renvoi 50 et le boîtier 48, comme plus particulièrement représenté sur les Figs. 6 à 9.

Afin de synchroniser les mouvements en rotation du panneau supérieur 22 et du panneau inférieur 24, la distance h1 selon la direction d'élévation Z( Fig. 5) entre la première liaison pivot 54 et la liaison pivot supérieure36 est sensiblement égale à la distance h2 selon la direction d'élévation Z (Fig. 6) entre la deuxième liaison pivot 58 et la liaison pivot inférieure 46 et la distance I1 selon la direction longitudinale L (Fig. 5) entre la première liaison pivot 54 et la liaison pivot supérieure36 est sensiblement égale à la distance I2 selon la direction longitudinale L (Fig. 6) entre la deuxième liaison pivot 58 et la liaison pivot inférieure 46. Un tel rapport de distances permet d'assurer que le deuxième angle β, duquel se déplace le panneau inférieur 24 lorsque le panneau supérieur se déplace du premier angle α, soit égal à deux fois le premier angle α. Ainsi, lorsque la cloison de séparation 14 est déplacée de la position déployée à la position rétractée, le panneau inférieur 24 atteint la position dans laquelle il est appliqué contre le panneau supérieur 22 au moment où le panneau supérieur 22 atteint la position dans laquelle il est appliqué contre le plafond 4, le deuxième angle β passant de 180° à 0° pendant que le premier angle α passe de 90° à 0°. De même, lorsque la cloison de séparation 14 est déplacée de la position rétractée à la position déployée, le panneau inférieur 24 atteint la position dans laquelle le bord inférieur 32 du panneau inférieur 14 s'étend contre le plancher 2 au moment où le panneau supérieur 22 atteint la position dans laquelle le panneau supérieur 22 s'étend sensiblement perpendiculairement au plafond 4.

Le dispositif de transmission 40 permet de déplacer le panneau inférieur 24 et le panneau supérieur 22 avec une unique action d'un opérateur puisque le déplacement du panneau supérieur 22 entraîne celui du panneau inférieur 24. Ainsi, un opérateur exerçant une force vers le plafond 4 selon la direction d'élévation Z sur la cloison de séparation 14 peut déplacer l'ensemble de celle-ci de la position déployée à la position rétractée. De même, un opérateur exerçant une force vers le plancher 2 selon la direction d'élévation Z sur la cloison de séparation 14 peut déplacer l'ensemble de celle-ci de la position rétractée à la position déployée. Une telle force est par exemple exercée par l'intermédiaire d'un dispositif de préhension 60 prévu sur le boîtier 48. Le dispositif de préhension 60 comprend par exemple au moins une poignée 62 s'étendant sur une face du boîtier 48 et permettant à un opérateur de pousser le panneau supérieur 22 vers le plafond 4 lorsque la cloison de séparation 14 est dans la position déployée et au moins une sangle 64 attachée au boîtier 48 et permettant à un opérateur de tirer le panneau supérieur 22 vers le plancher 2 lorsque la cloison de séparation 14 est dans la position rétractée. La force nécessaire pour effectuer ces déplacements est réduite grâce à l'utilisation d'un ou plusieurs systèmes d'équilibrage comme éléments d'actionnement 38, comme décrit précédemment. Ainsi, le déplacement de la cloison de séparation 14 est particulièrement simple à actionner et nécessite peu de force de la part d'un opérateur. Le dispositif de préhension 60 étant prévu sur le boîtier 48, celui-ci ne change pas d'orientation lorsque les panneaux supérieur 22 et inférieur 24 sont déplacés en rotation. En d'autres termes, le dispositif de préhension 60 reste en permanence face à l'opérateur actionnant la cloison de séparation 14 quelle que soit la position de celle-ci. L'actionnement de la cloison de séparation 14 est ainsi particulièrement ergonomique.

En outre, on notera que le dispositif de préhension 60 n'ajoute pas à l'encombrement en hauteur de la cloison de séparation 14 lorsque celle-ci est dans la position rétractée car le dispositif de préhension 60 s'étend en saillie du boîtier 48 dont la hauteur correspond sensiblement à l'addition des épaisseurs des panneaux supérieur 22 et inférieur 24, comme représenté sur la Fig. 4.

Selon un mode de réalisation représenté sur les Figs. 6 à 9, la cloison de séparation 14 comprend en outre un dispositif de blocage 66 permettant d'immobiliser la cloison de séparation 14 dans la position déployée et dans la position rétractée afin d'empêcher une rétractation ou un déploiement involontaire de la cloison de séparation 14, par exemple en cas d'impact sur le véhicule ou en raison de vibrations importantes lorsque le véhicule circule.

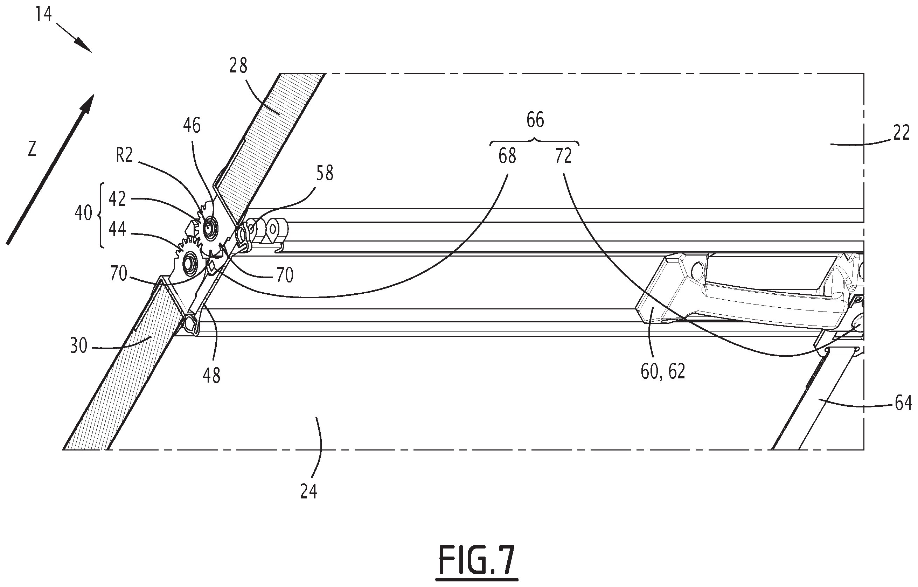

A cet effet, le dispositif de blocage 66 est mobile entre une position de blocage (Figs. 6, 8 et 9) dans laquelle le dispositif de blocage 66 interfère avec le dispositif de transmission 40 pour empêcher le déplacement de la cloison de séparation 14 entre la position déployée et la position rétractée, et une position de débrayage (Fig. 7), dans laquelle le dispositif de blocage 66 est désengagé du dispositif de transmission 40 pour autoriser le déplacement de la cloison de séparation 14 entre la position déployée et la position rétractée.

Le dispositif de blocage 66 comprend par exemple un doigt de blocage 68 monté mobile en rotation autour d'un axe de rotation transversal dans le boîtier 48. Dans la position de blocage, le doigt de blocage 68 est engagé dans une encoche 70 ou entre deux dents dans des éléments d'engrenage, par exemple l'élément d'engrenage supérieur 42, de sorte à empêcher tout déplacement des éléments d'engrenage l'un par rapport à l'autre. Dans la position de débrayage, le doigt de blocage 68 est écarté des éléments d'engrenage et n'empêche pas le déplacement de ceux-ci l'un par rapport à l'autre.

Le doigt de blocage 68 est par exemple contraint vers la position de blocage et son déplacement vers la position de débrayage se fait par l'intermédiaire d'un ou plusieurs éléments d'actionnement 72. Selon un mode de réalisation, l'élément d'actionnement 72 est un bouton accessible au voisinage de la ou d'une des poignées 62 formant le dispositif de préhension 60, un appui sur le bouton déplaçant le doigt de blocage 68 vers la position de débrayage et un relâchement du bouton entraînant un retour du doigt de blocage 68 dans la position de blocage. Selon un mode de réalisation, un élément d'actionnement 72 est également solidaire de la sangle 64, une traction sur celle-ci déplaçant le doigt de blocage 68 vers la position de débrayage et un relâchement de celle-ci entraînant un retour du doigt de blocage 68 dans la position de blocage. Ainsi, le dispositif de blocage 66 peut être actionné dans toutes les positions de la cloison de séparation, un élément d'actionnement 72 étant accessible en permanence quelle que soit la position de la cloison de séparation 14.

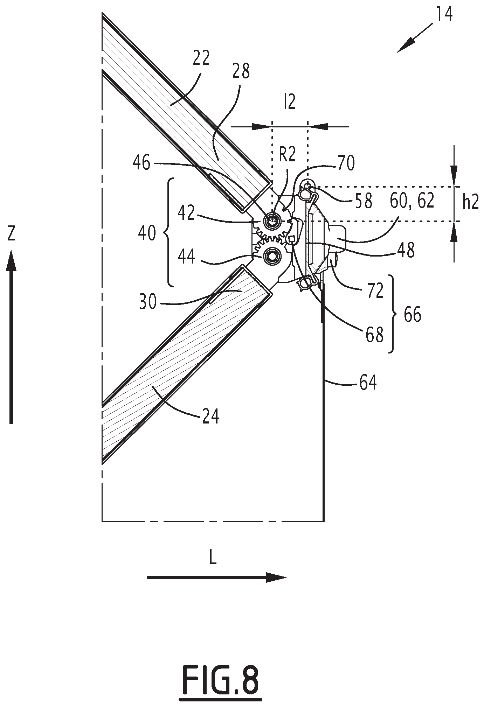

La position des encoches 70 est telle que le dispositif de blocage 66 est positionnable dans la position de blocage au moins lorsque la cloison de séparation 14 est dans la position rétractée et dans la position déployée. Selon un mode de réalisation, une encoche 70 est en outre prévue pour que le dispositif de blocage 66 soit positionnable dans la position de blocage dans au moins une position intermédiaire entre la position déployée et la position rétractée de la cloison de blocage 14. Dans cette position intermédiaire représentée sur les Figs. 3 et 8, le panneau inférieur 24 est légèrement replié vers le panneau supérieur 22 de sorte que son bord inférieur 32 soit suffisamment écarté du plancher 2 pour permettre un déplacement de l'ensemble de la cloison de séparation 14 en translation selon la direction longitudinale L sans que le contact entre le bord inférieur 32 du panneau inférieur 24 n'empêche ce déplacement.

En effet, selon un mode de réalisation avantageux, la cloison de séparation 14 est mobile en translation selon la direction longitudinale L de sorte à permettre de faire varier le volume des parties avant 16 et arrière 18 du volume interne 6 de l'enceinte réfrigérée 1, par exemple pour adapter le volume du compartiment surgelé au volume de marchandises placées dans ce compartiment surgelé.

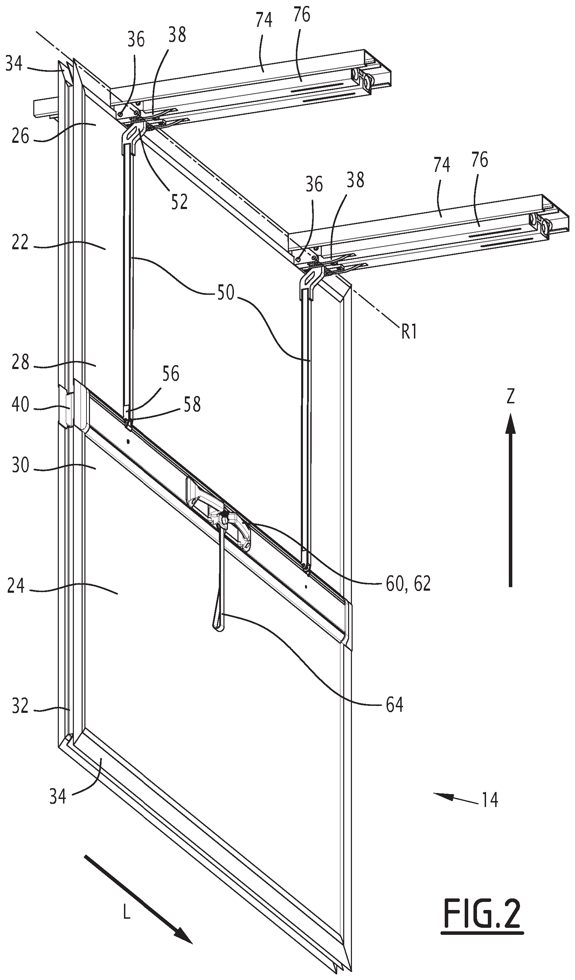

Selon ce mode de réalisation, l'enceinte réfrigérée 1 comprend par exemple au moins un rail 74 s'étendant selon la direction longitudinale L le long du plafond 4 de l'enceinte, la cloison de séparation 14 étant montée mobile en translation, par exemple par l'intermédiaire d'un ou plusieurs charriots 76 portant des galets, sur le rail 74. Ainsi, en plaçant la cloison de séparation 14 dans la position intermédiaire, la cloison de séparation 14 peut être rapprochée ou écartée de la cloison avant 10 de l'enceinte pour faire varier le volume de la partie avant 16 du volume interne 6, sans nécessiter de rétracter complètement la cloison de séparation 14. La position intermédiaire est par exemple choisie pour que la ou les poignées 62 soient à une hauteur adaptée et ergonomique pour qu'un opérateur puisse facilement déplacer la cloison de séparation 14 en utilisant ces poignées 62 pour pousser ou tirer la cloison de séparation 14 selon la direction longitudinale L. Comme représenté sur la Fig. 2, l'enceinte réfrigérée comprend par exemple deux rails 74 écartés l'un de l'autre selon la direction transversale et la cloison de séparation 14 comprend au moins un charriot 76 monté en translation sur chaque rail 74. Un tel mode de réalisation permet d'assurer un maintien robuste et un guidage efficace de la cloison de séparation 14 sur le plafond 4.

Le ou les charriots 76 sont par exemple équipé d'un frein 75 permettant d'immobiliser la cloison de séparation 14 sur le ou les rails 74 lorsque la cloison de séparation 14 est dans la position déployée et dans la position rétractée. Ce frein 75 est désactivé lorsque la cloison de séparation 14 est dans la position intermédiaire de sorte à permettre le déplacement en translation de la cloison de séparation 14 le long du ou des rails 74. Le frein est par exemple agencé pour se désactiver lorsque la cloison de séparation 14 est déplacé de la position déployée à la position intermédiaire ou de la position rétractée à la position intermédiaire et pour s'activer lorsque la cloison de séparation 14 est placée dans la position déployée ou dans la position rétractée. En d'autres termes, le frein 75 ne nécessite pas un actionnement particulier indépendant de celui de la cloison de séparation 14.

On notera que le dispositif de transmission 40 permet également au bord inférieur 32 du panneau inférieur 24 de se déplacer sensiblement dans un unique plan contenant la direction d'élévation Z entre la position déployée et la position rétractée. Ainsi, lorsque la cloison de séparation 14 est dans la position rétractée ou dans la position intermédiaire, il est facile de déterminer la position du bord inférieur 32 du panneau inférieur 24 sur le plancher 2 lorsque la cloison de séparation 14 est déplacé dans la position déployée à partir de cette position rétractée ou intermédiaire. Par conséquent, lorsque la cloison de séparation 14 est déplacée selon la direction longitudinale L alors qu'elle est dans la position intermédiaire, un opérateur peut facilement la positionner pour qu'elle soit située à l'endroit souhaité lorsqu'elle est placée dans la position déployée, la position du bord inférieur 32 du panneau inférieur 24 selon la direction longitudinale L ne variant pas selon que la cloison de séparation 14 est dans la position rétractée, intermédiaire ou déployée. La cloison de séparation 14 présente donc un rayon giratoire particulièrement faible, ce qui évite qu'elle n'interfère avec les marchandises stockées dans l'enceinte réfrigérée et/ou qu'elle ne risque de faire tomber un opérateur hors de l'enceinte réfrigérée lorsqu'elle est déplacée entre la position déployée et la position rétractée.

La cloison de séparation 14 est adaptée pour empêcher tout déplacement involontaire de la cloison de séparation 14 selon la direction longitudinale L lorsque la cloison de séparation 14 est dans la position déployée, par exemple en assurant une adhérence entre le bord inférieur 32 du panneau inférieur 24 et le plancher 2, notamment grâce au joint d'étanchéité 34, lorsque la cloison de séparation 14 est dans la position déployée.

On notera également que la cloison de séparation 14 est adaptée pour se replier légèrement lorsqu'elle est dans la position déployée et qu'un choc est appliqué, par exemple par un véhicule de manutention, sur le panneau inférieur 24. Ainsi, en cas de choc, la cloison de séparation 14 se replie plutôt que de résister au choc, ce qui pourrait entraîner un endommagement de celle-ci.

La cloison de séparation selon l'invention 14 est facilement actionnable entre la position déployée et la position rétractée, un unique actionnement requérant peu de force étant suffisant pour déployer ou rétracter la cloison de séparation 14. En outre, la cloison de séparation 14 est facilement positionnable selon la direction longitudinale L en plaçant la cloison de séparation 14 dans une position intermédiaire et la position finale selon la direction longitudinale L de la cloison de séparation 14 dans la position déployée est facilement déterminable à partir de l'observation de la position du bord inférieur 32 du panneau inférieur 24 lorsque la cloison de séparation 14 est dans la position intermédiaire ou rétractée. En outre, le passage de la position déployée à la position intermédiaire de la cloison de séparation 14 permet un équilibrage rapide de la pression entre la partie avant 16 et la partie arrière 18 du volume interne 6 de l'enceinte réfrigérée 1

La synchronisation du déplacement du panneau inférieur 24 avec celui du panneau supérieur 22 a été décrite comme se faisant par l'intermédiaire d'un dispositif de transmission 40 comprenant un élément d'engrenage supérieur 42 et un élément d'engrenage inférieur 44 entre les panneaux supérieur 22 et inférieur 24 et par l'intermédiaire d'une barre de renvoi 50. Il est cependant entendu que le dispositif de transmission pourrait présenter un agencement différent. Ainsi, selon une alternative non représentée, le dispositif de transmission peut être formé par un couple d'éléments d'engrenage coniques supérieur assurant l'articulation du panneau supérieur 22 au plafond 4 et par un couple d'éléments d'engrenage coniques inférieur assurant l'articulation du panneau inférieur 24 sur le panneau supérieur 22 et par un arbre de transmission s'étendant entre les couples d'éléments d'engrenage coniques supérieur et inférieur. L'arbre de transmission, s'étendant par exemple dans le panneau supérieur 22, transmet alors le mouvement du couple d'éléments d'engrenage coniques supérieur au couple d'éléments d'engrange coniques inférieur pour synchroniser le déplacement du panneau inférieur avec celui du panneau supérieur.

## Revendications

1. Enceinte réfrigérée (1) comprenant un plancher (2) et un plafond (4), écartés l'un de l'autre selon une direction d'élévation (Z) et définissant entre eux un volume interne (6), et au moins une cloison de séparation (14), ladite cloison de séparation (14) comprenant au moins un panneau supérieur (22) articulé au plafond (4) et au moins un panneau inférieur (24) articulé au panneau supérieur (22), ladite cloison de séparation étant mobile entre une position déployée, dans laquelle le panneau supérieur (22) et le panneau inférieur (24) s'étendent dans la continuité l'un de l'autre selon la direction d'élévation (Z) du plafond (4) au plancher (2) pour séparer le volume interne (6) en deux parties (16, 18) s'étendant de part et d'autre de la cloison de séparation (14) selon une direction longitudinale (L), sensiblement perpendiculaire à la direction d'élévation (Z), et une position rétractée, dans laquelle le panneau supérieur (22) s'étend sensiblement parallèlement au plafond (4) et au voisinage dudit plafond (4) et le panneau inférieur (24) s'étend contre le panneau supérieur (22) pour libérer un passage entre les deux parties (16, 18) du volume interne (6), **caractérisé en ce que** la cloison de séparation (14) comprend un dispositif de transmission (40) entre le panneau supérieur (22) et le panneau inférieur (24), ledit dispositif de transmission (40) étant agencé pour qu'un déplacement du panneau supérieur (22) vers le plafond (4) entraine un déplacement du panneau inférieur (24) vers le panneau supérieur (22) pour déplacer la cloison de séparation (14) de la position déployée à la position rétractée.

2. Enceinte réfrigérée selon la revendication 1, dans laquelle le dispositif de transmission (40) comprend un élément d'engrenage supérieur (42) solidaire du panneau supérieur (22) et un élément d'engrenage inférieur (44) solidaire du panneau inférieur (24), l'élément d'engrenage supérieur (42) étant engrené avec l'élément d'engrenage inférieur (44), un déplacement du panneau supérieur (22) en rotation par rapport au plafond (4) entraînant un déplacement de l'élément d'engrenage inférieur (44) sur l'élément d'engrenage supérieur (42), ce qui entraîne un déplacement du panneau inférieur (24) en rotation par rapport au panneau supérieur (22).

3. Enceinte réfrigérée selon la revendication 1 ou 2, dans laquelle la cloison de séparation (14) comprend une barre de renvoi (50) articulée à une première extrémité (52) au plafond (4) autour d'une première liaison pivot (54) et à une deuxième extrémité (56) au dispositif de transmission (40) autour d'une deuxième liaison pivot (58).

4. Enceinte réfrigérée selon la revendication 3, dans laquelle le panneau supérieur (22) s'étend entre un bord supérieur (26), articulé au plafond (4) autour d'une liaison pivot supérieure (36), et un bord inférieur (28), articulé au panneau inférieur (24) autour d'une liaison pivot inférieure (46), les distances (h1, l1) selon la direction d'élévation (Z) et selon la direction longitudinale (L) entre la première liaison pivot (54) et la liaison pivot supérieure (36) étant sensiblement égales aux distances (h2, l2) selon la direction d'élévation (Z) et selon la direction longitudinale (L) entre la deuxième liaison pivot (58) et la liaison pivot inférieure (46).

5. Enceinte réfrigérée selon l'une quelconque des revendications 1 à 4, dans laquelle le déplacement du panneau supérieur (22) d'un premier angle (α) par rapport au plafond (4) entraîne le déplacement du panneau inférieur (24) d'un deuxième angle (β) par rapport au panneau supérieur (22), le deuxième angle (β) étant sensiblement égal à deux fois le premier angle (α).

6. Enceinte réfrigérée selon l'une quelconque des revendications 1 à 5, dans laquelle la cloison de séparation (14) comprend un dispositif de blocage (66) mobile entre une position de blocage, dans laquelle le dispositif de blocage (66) interfère avec le dispositif de transmission (40) pour empêcher le déplacement de la cloison de séparation (14) entre la position déployée et la position rétractée, et une position de débrayage, dans laquelle le dispositif de blocage (66) est désengagé du dispositif de transmission (40) pour autoriser le déplacement de la cloison de séparation (14) entre la position déployée et la position rétractée.

7. Enceinte réfrigérée selon la revendication 6, dans laquelle le dispositif de blocage (66) est positionnable dans la position de blocage lorsque la cloison de séparation (14) est dans la position déployée, dans la position rétractée et dans au moins une position intermédiaire entre la position déployée et la position rétractée.

8. Enceinte réfrigérée selon l'une quelconque des revendications 1 à 7, dans laquelle le panneau inférieur (24) s'étend entre un bord supérieur (30) articulé au panneau supérieur (22) et un bord inférieur (32) opposé au bord supérieur (30), le bord inférieur (32) étant en contact étanche avec le plancher (2) dans la position déployée et étant écarté dudit plancher (2) selon la direction d'élévation (Z) lorsque la cloison de séparation (14) se déplace vers la position rétractée.

9. Enceinte réfrigérée selon la revendication 8, dans laquelle le bord inférieur (32) du panneau inférieur (24) se déplace sensiblement dans un unique plan contenant la direction d'élévation (Z) entre la position déployée et la position rétractée.

10. Enceinte réfrigérée selon l'une quelconque des revendication 1 à 9, dans laquelle la cloison de séparation (14) est montée sur le plafond (4) de façon mobile en translation selon la direction longitudinale (L) de sorte à faire varier le volume des parties (16, 18) du volume interne (6) s'étendant de part et d'autre de la cloison de séparation (14) en déplaçant la cloison de séparation (14) selon la direction longitudinale (L).
